# EUROPÄISCHE PATENTSCHRIFT

(11) **EP 0 611 453 B1**
(45) Veröffentlichungstag und Bekanntmachung des Hinweises auf die Patenterteilung: **08.01.1997**
(21) Anmeldenummer: 92919520.4
(22) Anmeldetag: 09.09.1992
(51) Int. Cl.: G02B 6/25

(54) **VERFAHREN ZUM TRENNEN EINER OPTISCHEN WELLENLEITERFASER UND VERFAHREN ZUM HERSTELLEN EINES ENDSTÜCKES EINER OPTISCHEN WELLENLEITERFASER**
METHOD OF CUTTING AN OPTICAL FIBRE IN TWO, AND A METHOD OF PRODUCING AN END-PIECE ON AN OPTICAL FIBRE
PROCEDE POUR LE SECTIONNEMENT D'UNE FIBRE OPTIQUE ET MODE DE TERMINAISON D'UNE FIBRE OPTIQUE

(30) Priorität: 04.11.1991 DE 4136558
(43) Veröffentlichungstag der Anmeldung: 24.08.1994
(73) Patentinhaber: SIEMENS AKTIENGESELLSCHAFT, 80333 München (DE)
(72) Erfinder: BORNHAUSER, Adolf, Christian,Dr., D-10967 Berlin (DE); RAMME, Rolf,Dr., D-13587 Berlin (DE); FISCHBACH, Reinhard, D-13627 Berlin (DE)
(86) Internationale Anmeldenummer: DE9200774
(87) Internationale Veröffentlichungsnummer: WO9309453

(56) Entgegenhaltungen:
- DE-A- 2 619 567
- GB-A- 1 595 164
- GB-A- 2 164 879
- US-A- 4 621 754

## Beschreibung

Die Erfindung betrifft ein Verfahren zum Abtrennen eines Endabschnitts von einer optischen Wellenleiterfaser, bei dem die Faser im Trennbereich gegen Ausweichbewegungen beim Trennvorgang stabilisiert wird.

Bei einem derartigen bekannten (DE-OS 27 57 078) Verfahren wird die Faser durch zwei beidseitig einer zu erzeugenden Trennfläche angreifenden Halteelemente gegen Ausweichbewegungen beim Trennvorgang stabilisiert. Anschließend wird die Faser durch eine entgegengesetzte Entfernungs-Bewegung der Halteelemente mit einer axialen Zugspannung beaufschlagt. In diesem vorgespannten Zustand wird ein Anritzen (Mikrosprung) der Faser bewirkt, indem ein bewegbares Schneideblatt in eine den Faserumfang berührende Stellung verfahren wird. Aufgrund der Vorspannung breitet sich der Mikrosprung durch die Faser diametral aus und führt zur Trennung bzw. der Ausbildung der Trennfläche der Faser.

Das Anritzen einer Faser mit einer Diamant-Schneide ist auch aus der US-PS 4,621,754 bekannt.

Bei den bekannten Verfahren ist die Ausbildung der Trennfläche nicht exakt reproduzierbar, weil diese in ihrer Feinstruktur von der nicht steuerbaren diametralen Ausbreitung des Mikrosprunges abhängig ist. Durch das Anritzen der Faser können Sprungkeime erzeugt werden, die bei entsprechender Belastung der Faser zu unerwünschten axialen Sprungausbreitungen und/oder Rißbildungen führen. Durch das Anritzen wird ferner zumindest an einer der Trennflächen ein nicht ebener Verlauf der Trennfläche in Kauf genommen. Für die Einkopplung bzw. Auskopplung der in der Faser zu übertragenden optischen Informationen ist eine hohe, reproduzierbare 0berflächengüte der Trennflächen wünschenswert, so daß bei dem bekannten Verfahren zumindest aufwendige Nachbehandlungen der Trennfläche erforderlich sind.

Aus der GB-A-2 164 879 ist ein Verfahren zum Trennen von Glasplatten gemäß einer Musterplatte (Kopierschneiden) bekannt, bei der zum Erzielen einer hohen Schnittgeschwindigkeit ein Bearbeitungsdruck von 20.000 psi bis 35.000 psi (1380 bis 2415 bar (mit 1 psi = 6,9.10⁻³N/mm² = 6,9. 10⁻²bar)) notwendig ist.

Der Erfindung liegt daher die Aufgabe zugrunde, ein Verfahren zum Trennen einer optischen Wellenleiterfaser zu schaffen, das mit einfachen fertigungstechnischen Mitteln qualitativ hochwertige, zuverlässig reproduzierbare Trennergebnisse liefert.

Diese Aufgabe wird bei einem Verfahren der eingangs genannten Art erfindungsgemäß dadurch gelöst, daß der Endabschnitt durch einen im Trennbereich auf die Faser gerichteten Partikelstrahl abgetrennt wird. Mit dem erfindungsgemäßen Verfahren lassen sich in vorteilhafter Weise die bei den Trennvorgängen geschaffenen Trennflächen in einer vorherbestimmbaren, wiederholbaren und überraschend hohen Qualität erzeugen. Ein wesentlicher Vorteil besteht auch darin, daß ein verschleißbehaftetes, wartungsintensives Schneidewerkzeug nicht erforderlich ist. Ein weiterer Vorteil besteht darin, daß auf die Faser während des Trennvorgangs keine Vorspannung ausgeübt werden muß; eine Lagerung oder Stabilisierung der Faser kann bei dem erfindungsgemäßen Verfahren daher aus einer einfachen, der Strahlrichtung entgegenwirkenden Auflage für die Faser bestehen. Eine etwa vorhandene Ummantelung (Coating) der Faser stört den Trennvorgang bei dem anmeldungsgemäßen Verfahren nicht und muß daher nicht unbedingt entfernt werden. Das erfindungsgemäße Verfahren ist zudem einfach automatisierbar.

Die eingangs geschilderten Schwierigkeiten im Hinblick auf die Qualität der gebildeten Trennfläche wirken sich besonders störend beim Herstellen eines Endstückes einer optischen Wellenleiterfaser aus. Dabei wird bekanntermaßen (DE-OS 26 19 567) ein Endbereich der Faser durch eine Bohrung eines Endteils bis zum Austritt eines Endabschnitts aus der Bohrung hindurchgeführt und dann die Faser in der Bohrung verklebt. Anschließend muß der Endabschnitt kurz vor dem Endteil abgetrennt und die dabei entstandene endteilseitige Trennfläche zur Bildung eines hochwertigen, optischen Anschlusses bearbeitet werden. Wird bei diesem bekannten Verfahren der Endabschnitt mit dem aus der DE-OS 27 57 078 bekannten Verfahren abgetrennt, wirken sich die eingangs geschilderten Schwierigkeiten hinsichtlich der Qualität der Trennfläche und der Gefahr von Sprung- oder Rißausbreitungen unmittelbar störend auf die Einkopplungs-bzw. Auskopplungsqualität des Endstückes und damit auch auf die Übertragungscharakteristik der Faser aus.

Eine diesbezüglich vorteilhafte Weiterbildung des erfindungsgemäßen Verfahrens sieht vor, daß ein Endbereich der Faser durch eine Bohrung eines Endteils bis zum Austritt des Endabschnitts aus der Bohrung hindurchgeführt wird, daß die Faser in der Bohrung verklebt wird, daß der Endabschnitt zumindest an seinem endteilnahen Bereich vor dem Trennvorgang mit Klebstoff benetzt wird und daß der Endabschnitt vor dem Endteil abgetrennt wird.

Neben den bereits erwähnten Vorteilen hinsichtlich des fertigungstechnischen Aufwandes und der Trennflächenqualität ist besonders vorteilhaft, daß die Stabilisierung der Faser während des Trennvorgangs durch den den Endabschnitt benetzenden, ausgehärteten Klebstoff erfolgt. Der zur Stabilisierung erforderliche Klebstoffauftrag kann vorteilhafterweise also während des ohnehin notwendigen Verfahrensschrittes der Klebung erfolgen.

In diesem Zusammenhang sieht eine besonders vorteilhafte Weiterbildung dieses erfindungsgemäßen Verfahrens vor, daß vor dem Einführen der Faser einführungsseitig eine für die Verklebung der Faser in der Bohrung und die Benetzung des endteilnahen Bereichs des Endabschnitts ausreichende Klebstoffmenge eingebracht wird.

Als besonders geeignetes Mittel zur Bildung des Partikelstrahls hat sich gemäß einer vorteilhaften Fortbildung der Erfindung Korundpulver erwiesen, das für die erfindungsgegemäßen Zwecke eine besonders geeignete Härte und ein günstiges Schneidverhalten aufweist und ein besonders preisgünstiges Trennmittel darstellt.

Vorzugsweise wird eine Partikelgröße im Bereich zwischen 10 µm und 100 µm eingestellt; Versuche haben besonders günstige Ergebnisse im Bereich zwischen 25 µm und 50 µm ergeben.

Ein hinsichtlich der benötigten Trennzeit und der Handhabung des Verfahrens besonders günstiger Partikelstrahldruck liegt ungefähr im Bereich von 5 bar (entsprechend 5.10⁵ Pa).

Hinsichtlich der Trennflächenqualität besonders günstige Verfahrensergebnisse sind zu erzielen, wenn der Partikelstrahldurchmesser durch entsprechende Düsenwahl auf ungefähr 0,5 mm eingestellt wird.

Mit den vorgenannten, besonders vorteilhaften Partikelstrahlparametern läßt sich eine Trennzeit pro Faser von weniger als einer Sekunde erreichen. Das erfindungsgemäße Verfahren zeichnet sich damit auch durch eine äußerst geringe Taktzeit (günstige Automatisierbarkeits-Voraussetzung) aus.

Gemäß einer vorteilhaften Ausgestaltung des erfindungsgemäßen Verfahrens wird der Partikelstrahl in einem Winkel von höchstens 20° zur Faserlängsachse auf die Faser gerichtet; mit dieser Ausrichtung des Partikelstrahls läßt sich eine besonders gleichmäßige Trennfläche erzielen, die sich bei einer gegebenenfalls vorhandenen Ummantelung der Faser mit einem weichen Material verhältnismäßig weit zurückgezogen ausbildet.

Gemäß einer weiteren vorteilhaften Fortbildung des erfindungsgemäßen Verfahrens wird der Partikelstrahl annähernd rechtwinklig zur Faserlängsachse auf die Faser gerichtet. Dabei ist in vorteilhafter Weise bei qualitativ hochwertiger Trennfläche ein annähernd nahtloser Übergang der Faser zu einem die Faser umgebenden Material (Coating) gewährleistet.

Eine besonders vorteilhafte Ausgestaltung der Erfindung wird nachfolgend anhand einer Zeichnung näher erläutert; es zeigen
Figur 1 das Einführen eines Endbereichs einer Faser in ein Endteil,
Figur 2 eine Vorrichtung zur Durchführung einzelner Schritte des erfindungsgemäßen Verfahrens,
Figur 3 einen Ausschnitt aus der Figur 2,
Figur 4 eine Alternative zur Anordnung gemäß Figuren 2 und 3 und
Figuren 5A und 5B Ergebnisse des erfindungsgemäßen Verfahrens in erheblicher Vergrößerung.

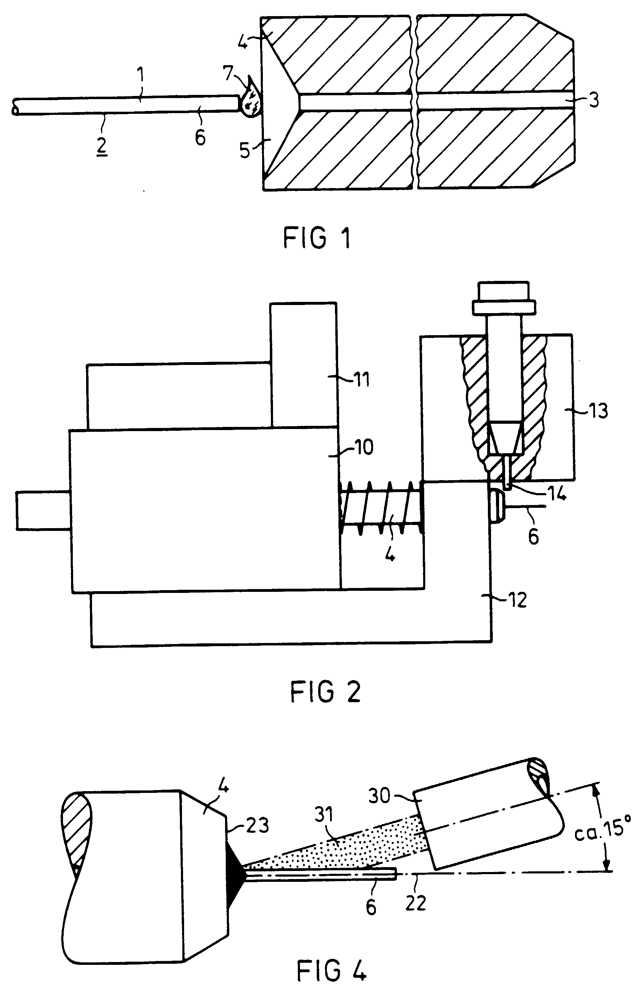

Das erfindungsgemäße Verfahren zum Trennen einer optischen Wellenleiterfaser wird anhand eines Verfahrens zum Herstellen eines Endstückes für eine optische Wellenleiterfaser beschrieben, an dessen Endbereich ein Trennen der Faser notwendig ist. Gemäß Figur 1 wird ein Endbereich 1 einer optischen Wellenleiterfaser 2 in eine Bohrung 3 eines Endteils 4 mit einer Fase 5 eingeführt und so weit durchgeschoben, bis ein Endabschnitt 6 der Faser 2 aus der Bohrung 3 heraustritt. Um die Faser 2 mit einem Teil ihres Endbereichs 1 in der Bohrung 3 zu verkleben, wird bohrungsseitig Klebstoff 7 an die Fase 5 und/oder auf den Endabschnitt 6 gebracht. Beim Hindurchführen der Faser 2 durch die Bohrung 3 wird auch der schließlich außerhalb der Bohrung 3 liegende Endabschnitt 6 mit Klebstoff 7 benetzt.

Nach Aushärten des Klebstoffs wird gemäß Figur 2 das in einem Steckergehäuse 10 gelagerte Endteil 4 in einer Vorrichtung 11 und 12 fixiert, die eine Einrichtung zum Partikelstrahlen (Sandstrahlen) 13 mit einer Austrittsdüse 14 für die Partikel aufweist. Von der Faser 2 erkennt man in Figur 2 nur den mit ausgehärtetem Klebstoff benetzten Endabschnitt 6.

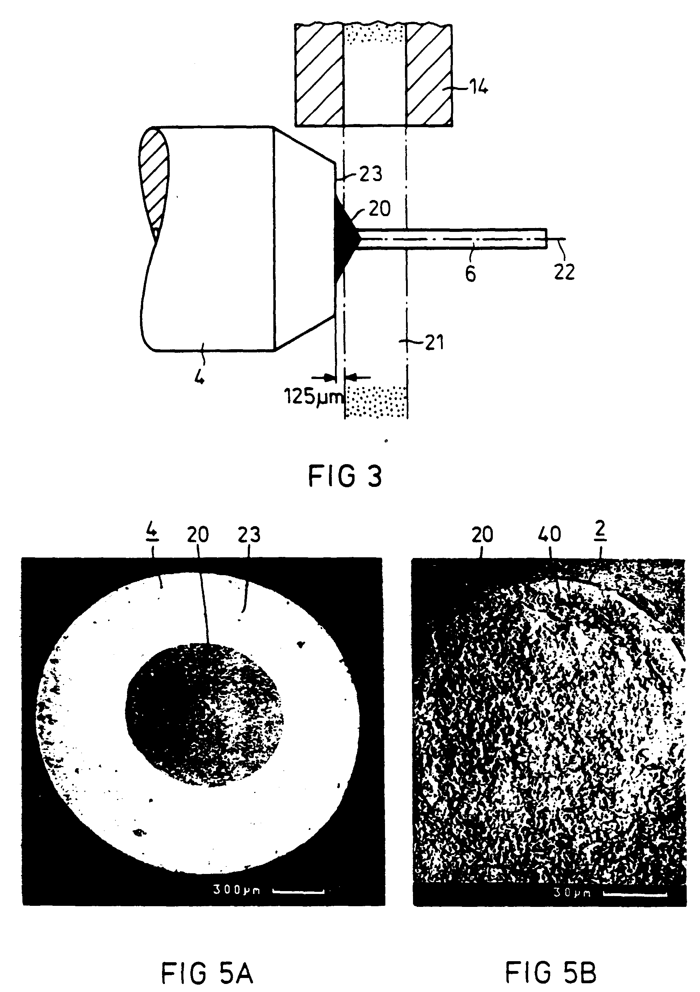

Figur 3 zeigt in einem detaillierten Ausschnitt aus Figur 2 im Bereich der Düse 14, daß der Endabschnitt 6 zumindest endteilseitig mit ausgehärtetem Klebstoff 20 benetzt ist, der zur Stabilisierung der Faser 2 bzw. des Endabschnitts 6 gegen Ausweichbewegungen beim nachfolgenden Trennvorgang dient. Der Klebstoff ist beim Durchführen der Faser 2 durch die Bohrung 3 (Figur 1) ausgetreten. Aus der Düse 14 tritt ein Partikelstrahl 21 rechtwinklig zur Faserlängsachse 22 aus. Die den Partikelstrahldurchmesser bestimmende Düsenbohrung beträgt 0,5 mm. Der Partikelstrahl besteht zumindest teilweise aus Korundpulver, dessen einzelne Korundkörner eine Größe im Bereich zwischen 25 und 50 µm aufweisen. Unter Größe ist dabei die längste Abmessung, bei annähernd kugelförmigen Partikeln also deren Durchmesser zu verstehen. Der Partikelstrahl tritt mit einem Druck von 5 bar aus der Düse aus, wobei der Abstand des Düsenumfangs in bezug auf eine Stirnfläche 23 des Endteils 4 ca. 125 µm beträgt. Die mit der Anordnung gemäß Figur 2 geschaffene Trennfläche zeichnet sich durch einen stufenlosen, äußerst homogenen Übergang der Fasertrennfläche zu der Trennfläche einer evtl. vorhandenen Ummantelung aus.

Gemäß Figur 4 ist in einer alternativen Ausführungsform eine Düse 30 derart angeordnet, daß ein Partikelstrahl 31 in bezug auf die Faserlängsachse 22 in einem Winkel von höchstens 20°, vorzugsweise in einem Winkel von 15°, auf die Faser bzw. den Endabschnitt 6 gerichtet wird.

Der Partikelstrahl bewirkt in seinem Auftreffbereich einen Materialabtrag, durch den der Endabschnitt 6 nahe der Stirnfläche 23 des Endteils 4 abgetrennt wird; gemäß Figur 3 steht die auf diese Weise gebildete Trennfläche der Faser ca. 125 µm über.

Anschließend wird die auf diese Weise gebildete, trotz des Trennvorgangs mittels undefinierter Schneide überraschend gleichmäßige und saubere Trennfläche in an sich bekannter Weise (DE-OS 26 19 567) geschliffen und poliert, um einen optisch hochwertigen Anschluß zu schaffen. Aufgrund der hohen Qualität und zuverlässigen Reproduzierbarkeit der durch den Partikelstrahl geschaffenen Trennfläche kann auch das - sich ggf. nach einer kurzen Reinigung der Trennfläche, z. B. mit Preßluft - anschließende Schleif- und Polierverfahren hinsichtlich seiner Parameter exakt vorherbestimmt und damit die Taktzeiten vergleichmäßigt werden.

Die Beschaffenheit der Trennfläche ist in Figuren 5A bzw. 5B in erheblicher Vergrößerung dargestellt; Figur 5A zeigt die Stirnfläche des Endteils 4 mit ausgetretenem Klebstoff 20 (vgl. Figur 3), nachdem der Endabschnitt 6 (Figur 2) bereits entfernt ist. Figur 5B zeigt die Beschaffenheit der Trennfläche 40 der Faser 2, an die sich unmittelbar die zur Stirnfläche 23 hin abfallende Oberfläche des ausgetretenen, verbliebenen Klebstoffs 20 anschließt; obwohl die Trennfläche 40 und die Klebstoffoberfläche eine ähnliche Oberflächenbeschaffenheit aufgrund der Partikeleinwirkung zeigen, ist die Trennfläche 40 vollständig frei von Klebstoffresten.

Mit dem erfindungsgemäßen, leicht automatisierbaren Verfahren ist die Bildung von sich axial ausbreitenden Sprüngen oder Rissen infolge des Trennvorgangs erheblich vermindert, da es zur Trennung der Faser keines Initialsprungs (Mikrosprung) bedarf; die Klebstoffummantelung bzw. eine vorhandene Ummantelung der Faser (Coating) wirken zusätzlich als Schutz vor derartigen Sprüngen bzw. Rissen. Die Trennfläche 40 ist äußerst gleichmäßig und homogen ausgebildet, da der gesamte Trennvorgang in kontrollierter Form abläuft.

## Patentansprüche

1. Verfahren zum Abtrennen eines Endabschnitts (6) von einer optischen Wellenleiterfaser (2), bei dem die Faser (2) im Trennbereich gegen Ausweichbewegungen beim Trennvorgang stabilisiert wird,
**dadurch gekennzeichnet**, daß
der Endabschnitt (6) durch einen im Trennbereich auf die Faser (2) gerichteten Partikelstrahl (21) abgetrennt wird.

2. Verfahren nach Anspruch 1,
**dadurch gekennzeichnet**,
- daß ein Endbereich (1) der Faser (2) durch eine Bohrung (3) eines Endteils (4) bis zum Austritt des Endabschnitts (6) aus der Bohrung (3) hindurchgeführt wird,
- daß die Faser (2) in der Bohrung (3) verklebt wird,
- daß der Endabschnitt (6) zumindest an seinem endteilnahen Bereich vor dem Trennvorgang mit Klebstoff (20) benetzt wird und
- daß der Endabschnitt (6) vor dem Endteil (4) abgetrennt wird.

3. Verfahren nach Anspruch 2,
**dadurch gekennzeichnet**, daß
vor dem Einführen der Faser (2) einführungsseitig eine für die Verklebung der Faser (2) in der Bohrung (3) und die Benetzung des endteilnahen Bereichs des Endabschnitts (6) ausreichende Klebstoffmenge (7) eingebracht wird.

4. Verfahren nach einem der vorangehenden Ansprüche,
**dadurch gekennzeichnet**, daß
der Partikelstrahl (21) zumindest teilweise aus Korundpulver gebildet wird.

5. Verfahren nach einem der vorangehenden Ansprüche,
**dadurch gekennzeichnet**, daß
eine Partikelgröße im Bereich zwischen 10 µm und 100 µm, vorzugsweise zwischen 25 µm und 50 µm, gewählt wird.

6. Verfahren nach einem der vorangehenden Ansprüche,
**dadurch gekennzeichnet**, daß
der Partikelstrahldruck auf ungefähr 5 bar (5.10⁵ Pa) eingestellt wird.

7. Verfahren nach einem der vorangehenden Ansprüche,
**dadurch gekennzeichnet**, daß
der Partikelstrahldurchmesser auf ungefähr 0,5 mm eingestellt wird.

8. Verfahren nach einem der Ansprüche 1 bis 7,
**dadurch gekennzeichnet**, daß
der Partikelstrahl (31) in einem Winkel von höchstens 20° zur Faserlängsachse (20) auf die Faser (2) gerichtet wird.

9. Verfahren nach einem der Ansprüche 1 bis 7,
**dadurch gekennzeichnet**, daß
der Partikelstrahl (21) annähernd rechtwinklig zur Faserlängsachse (20) auf die Faser (2) gerichtet wird.

## Claims

1. Method for the separation of an end section (6) of an optical waveguide fibre (2), where the fibre (2) in the separating region is stabilized against evading movements during the separating procedure, characterized in that the end section (6) is separated by a particle stream (21) directed towards the fibre (2) in the separating region.

2. Method according to claim 1, characterized in that
- an end region (1) of the fibre (2) is guided through a bore (3) of an end part (4) until the end section (6) comes out of the bore (3),
- the fibre (2) is glued in the bore (3),
- the end section (6) is wetted with adhesive (20) before the separating procedure at least at its region near the end part and
- the end section (6) is separated in front of the end part (4).

3. Method according to claim 2, characterized in that before the insertion of the fibre (2), on the insertion side a quantity of adhesive (7) is introduced which is sufficient for gluing the fibre (2) in the bore (3) and for wetting the region of the end section (6) which is near the end part.

4. Method according to one of the preceding claims, characterized in that the particle stream (21) is formed at least in part from corundum powder.

5. Method according to one of the preceding claims, characterized in that a particle size in the region of 10 µm to 100 µm, preferably of 25 µm to 50 pm, is selected.

6. Method according to one of the preceding claims, characterized in that the particle stream pressure is adjusted to about 5 bar (5,10⁵ Pa).

7. Method according to one of the preceding claims, characterized in that the particle stream diameter is adjusted to about 0.5 mm.

8. Method according to one of claims 1 to 7, characterized in that the particle stream (31) is directed towards the fibre (2) at an angle of at most 20° to the longitudinal axis of the fibre (20).

9. Method according to one of claims 1 to 7, characterized in that the particle stream (21) is directed towards the fibre (2) approximately at right angles to the longitudinal axis of the fibre (20).

## Revendications

1. Procédé de sectionnement d'un tronçon d'extrémité (6) d'une fibre (2) optique, dans lequel la fibre (2) est stabilisée dans la région de sectionnement vis-à-vis de tout mouvement de déviation lors de l'opération de sectionnement,
caractérisé en ce qu'il consiste à sectionner le tronçon d'extrémité (6) par un faisceau (21) de particules dirigé sur la fibre (2) dans la région de sectionnement.

2. Procédé suivant la revendication 1,
caractérisé en ce qu'il consiste
- à faire passer une partie d'extrémité (1) de la fibre (2) dans un trou (3) d'une pièce (4) d'extrémité jusqu'à ce que le tronçon d'extrémité (6) sorte du trou (3),
- à coller la fibre (2) dans le trou (3),
- à mouiller le tronçon d'extrémité (6) au moins sur sa partie proche de la pièce d'extrémité par de la colle (20) avant l'opération de sectionnement et
- à sectionner le tronçon d'extrémité (6) en avant de la pièce d'extrémité (4).

3. Procédé suivant la revendication 2,
caractérisé en ce qu'il consiste, avant d'introduire la fibre (2), à introduire du côté de l'introduction une quantité (7) de colle suffisante pour coller la fibre (2) dans le trou (3) et pour mouiller la partie du tronçon d'extrémité (6) qui est proche de la pièce d'extrémité.

4. Procédé suivant l'une des revendications précédentes,
caractérisé en ce qu'il consiste à former le faisceau de particules (21) au moins partiellement en poudre de corindon.

5. Procédé suivant l'une des revendications précédentes,
caractérisé en ce qu'il consiste à choisir une granulométrie des particules comprises entre 10 µm et 100 µm environ et de préférence entre 25 µm et 50 µm.

6. Procédé suivant l'une des revendications précédentes,
caractérisé en ce qu'il consiste à régler la pression du faisceau de particules à environ 5 bar (5.10⁵ Pa).

7. Procédé suivant l'une des revendications précédentes,
caractérisé en ce qu'il consiste à régler le diamètre du faisceau de particules à 0,5 mm environ.

8. Procédé suivant l'une des revendications 1 à 7,
caractérisé en ce qu'il consiste à diriger le faisceau (31) de particules sur la fibre (2) suivant un angle d'au plus 20° par rapport à l'axe (20) longitudinal de la fibre.

9. Procédé suivant l'une des revendications 1 à 7,
caractérisé en ce qu'il consiste à diriger le faisceau (21) de particules sur la fibre (2) à peu près perpendiculairement à l'axe (20) longitudinal de la fibre.
